# EUROPEAN PATENT APPLICATION

(11) **EP 4 539 541 A1**
(43) Date of publication of application: **16.04.2025**
(21) Application number: 23819171.2
(22) Date of filing: 07.06.2023
(51) Int. Cl.: H04W 36/00

(54) **SMALL DATA TRANSMISSION PROCESSING METHOD AND APPARATUS, AND READABLE STORAGE MEDIUM**

(30) Priority: 08.06.2022 CN 202210645997
(71) Applicant: Datang Mobile Communications Equipment Co., Ltd., Beijing 100085 (CN)
(72) Inventor: SUN, Jiancheng, Beijing 100085 (CN); FU, Jing, Beijing 100085 (CN)
(74) Representative: Studio Torta S.p.A.
(86) International application number: PCT/CN2023/098901
(87) International publication number: WO 2023/237006

(57) **Abstract**

A method for processing small data transmission, a device and a readable storage medium are provided, which relates to the field of communication technology to save air interface resources. The method includes: receiving, by a first access network node, downlink small data transmission (SDT) data and/or downlink non-access-stratum (NAS) signaling of a target terminal; determining, by the first access network node, that an anchor point transfer occurs on the target terminal; and sending, by the first access network node, SDT configuration information to a second access network node, where the second access network node is accessed by the target terminal, and the SDT configuration information is configured to process the downlink SDT data and/or the downlink NAS signaling of the target terminal.

## Description

### CROSS REFERENCE OF RELATED APPLICATION

The present disclosure claims a priority of Chinese patent disclosure No. 202210645997.0 filed on June 8, 2022, which is incorporated herein by reference in its entirety.

### TECHNICAL FIELD

The present disclosure relates to the field of communication technology, and in particular to a method for processing small data transmission, a device and a readable storage medium.

### BACKGROUND

In the Long Term Evolution (LTE) system, the state of the access stratum in user equipment (UE) include Radio Resource Control (RRC) Idle (IDLE) state and RRC Connected (Connected) state. In the 5th Generation (5G) New Radio (NR) technology, the RRC Inactive (RRC_ INACTIVE) state is introduced.

The characteristics of the RRC_ INACTIVE state are: from the core network point of view, the user equipment (UE) is still in the connection management (CM-Connected) state (non-access-stratum state), the radio access network (RAN) and the UE both retain the UE context of the access layer, but the UE's air interface resources are released. The UE in RRC_ INACTIVE state can reselect a cell, receive system information and broadcasted paging messages , and can quickly resume to RRC_CONNECTED state.

Small Data Transmission (SDT) mainly occurs during random access procedure. In 5G NR, some discussions have been conducted on whether and how to perform small data transmission in RRC_ INACTIVE state. However, usually, for the UE in RRC_ INACTIVE, if the UE has uplink (UL) or downlink (DL) data arrived, it will trigger the UE from RRC_ INACTIVE state to RRC_CONNECTED state, and then complete the data transmission in RRC_CONNECTED.

However, for scenarios where only a small amount of downlink data transmission or non-access-stratum (NAS) protocol data unit (PDU) is required, additional air interface processes are added, wasting air interface resources.

### SUMMARY

The embodiments of the present disclosure provide a method for processing small data transmission, a device and a readable storage medium to save air interface resources.

In a first aspect, a method for processing small data transmission is provided in the embodiment of the present disclosure, including:
receiving, by a first access network node ,downlink small data transmission (SDT) data and/or downlink non-access-stratum (NAS) signaling of a target terminal, where the target terminal is in a radio resource control (RRC)_INACTIVE state;
determining, by the first access network node, that an anchor point transfer occurs on the target terminal; and
sending, by the first access network node, SDT configuration information to a second access network node, where the second access network node is accessed by the target terminal, and the SDT configuration information is configured to process the downlink SDT data and/or the downlink NAS signaling of the target terminal.

Optionally, the sending, by the first access network node, SDT configuration information to a second access network node includes:
receiving, by the first access network node, a first message from the second access network node, where the first message is configured to request the target terminal context;
sending, by the first access network node, the target terminal context and the SDT configuration information to the second access network node.

Optionally, the SDT configuration information includes: information of a data radio bearer (DRB) used for SDT transmission, and/or information of a signaling radio bearer (SRB) used for SDT transmission.

Optionally, the information of the DRB used for SDT transmission includes one or more of the following:
an identifier of the DRB;
an identifier of the DRB and a first indication, where the first indication is configured to indicate whether one or more DRBs for SDT transmission have downlink SDT data to be transmitted; or
an identifier of the DRB and a second indication, where the second indication is configured to indicate information of downlink SDT data to be transmitted on one or more DRBs used for SDT transmission.

Optionally, the information of the SRB for SDT transmission includes one or more of the following:
an identifier of the SRB;
an identifier of the SRB and a third indication, where the third indication is configured to indicate whether one or more SRBs used for SDT transmission have downlink NAS signaling to be transmitted.

Optionally, after sending the target terminal context and the SDT configuration information to the second access network node, the method further includes one or more of the following:
sending, by the first access network node, the downlink SDT data to the second access network node; or
sending , by the first access network node, the downlink NAS signaling to the second access network node.

Optionally, the sending the downlink SDT data to the second access network node includes:
receiving, by the first access network node, a second message sent by the second access network node, where the second message carries a fourth indication, and the fourth indication is configured to indicate information of a data forwarding channel, and the data forwarding channel is configured to receive the downlink SDT data;
sending, by the first access network node, the downlink SDT data to the second access network node according to the second message.

Optionally, the sending the downlink NAS signaling to the second access network node includes:
sending, by the first access network node, a third message to the second access network node, where the third message includes the downlink NAS signaling.

Optionally, after receiving, by the first access network node, downlink small data transmission (SDT) data or downlink non-access-stratum (NAS) signaling of a target terminal, the method further includes:
initiating, by the first access network node, a paging within an RAN-based notification area (RNA), where the second access network node is located within the RNA.

In a second aspect, a method for processing small data transmission is provided in the embodiment of the present disclosure, including:
receiving, by a second access network node, small data transmission (SDT) configuration information sent by a first access network;
processing, by the second access network node, downlink SDT data and/or downlink NAS signaling of the target terminal according to the SDT configuration information;
where the target terminal is in a radio resource control (RRC)_INACTIVE state, and the access network node currently accessed by the target terminal is the second access network node.

Optionally, the receiving, by the second access network node, the SDT configuration information sent by the first access network includes:
determining, by the second access network node, that the target terminal is accessed to the second access network node;
sending, by the second access network node, a first message to the first access network node, where the first message is configured to request a target terminal context; and
receiving, by the second access network node, the target terminal context and the SDT configuration information sent by the first access network node.

Optionally, the SDT configuration information includes: information of a data radio bearer (DRB) used for SDT transmission, and/or information of a signaling radio bearer (SRB) used for SDT transmission.

Optionally, the information of the DRB used for SDT transmission includes one or more of the following:
an identifier of the DRB;
an identifier of the DRB and a first indication, where the first indication is configured to indicate whether one or more DRBs for SDT transmission have downlink SDT data to be transmitted; or
an identifier of the DRB and a second indication, where the second indication is configured to indicate information of downlink SDT data to be transmitted on one or more DRBs used for SDT transmission.

Optionally, the information of the SRB for SDT transmission includes one or more of the following:
an identifier of the SRB; or
an identifier of the SRB and a third indication, where the third indication is configured to indicate whether one or more SRBs used for SDT transmission have downlink NAS signaling to be transmitted.

Optionally, the second access network node processing the downlink SDT data of the target terminal according to the SDT configuration information includes:
if it is determined according to the SDT configuration information that the downlink SDT data is to be processed while keeping the target terminal in an RRC_INACTIVE state, sending, by the second access network node, a second message to the first access network node, where the second message carries a fourth indication, and the fourth indication is configured to indicate information of a data forwarding channel, and the data forwarding channel is configured to receive the downlink SDT data;
receiving, by the second access network node, the downlink SDT data which is sent by the first access network node according to the second message;
processing, by the second access network node, the downlink SDT data according to the target terminal context, and sending the processed downlink SDT data to the target terminal.

Optionally, the processing, by the second access network node, the downlink NAS signaling of the target terminal according to the SDT configuration information include:
if it is determined according to the SDT configuration information that the downlink NAS signaling is to be processed while keeping the target terminal in an RRC_INACTIVE state, receiving, by the second access network node, the downlink NAS signaling which is sent by the first access network node;
processing, by the second access network node, the downlink NAS signaling according to the target terminal context, and sending the processed downlink NAS signaling to the target terminal.

Optionally, before receiving, by the second access network node, the SDT configuration information sent by the first access network, the method further includes:
receiving, by the second access network node, a paging message which is sent by the first access network in an RAN-based notification area (RNA);
paging, by the second access network node, the target terminal according to the paging message.

Optionally, after processing, the second access network node, the downlink SDT data and/or the downlink NAS signaling of the target terminal according to the SDT configuration information, the method further includes one or more of the following:
updating, by the second access network node, a data channel between the second access network node and a core network; or
sending, by the second access network node, a fourth message to the target terminal, where the fourth message is configured to notify the target terminal to remain in the RRC_INACTIVE state.

In a third aspect, a small data transmission processing device is further provided in the embodiment of the present disclosure, applied to a first access network node, including: a memory, a transceiver, and a processor:
the memory is configured to store a computer program; the transceiver is configured to receive and transmit data under the control of the processor; and the processor is configured to read the computer program in the memory to perform:
receiving downlink small data transmission (SDT) data and/or downlink non-access-stratum (NAS) signaling of a target terminal, where the target terminal is in a radio resource control (RRC)_INACTIVE state;
determining that an anchor point transfer occurs on the target terminal; and
sending SDT configuration information to a second access network node, where the second access network node is accessed by the target terminal, and the SDT configuration information is configured to process the downlink SDT data and/or the downlink NAS signaling of the target terminal.

Optionally, the processor is further configured to read the computer program in the memory to perform:
receiving a first message from the second access network node, where the first message is configured to request a target terminal context;
sending the target terminal context and the SDT configuration information to the second access network node.

Optionally, the processor is further configured to read the computer program in the memory to perform:
sending the downlink SDT data to the second access network node;
sending the downlink NAS signaling to the second access network node.

Optionally, the processor is further configured to read the computer program in the memory to perform:
receiving a second message sent by the second access network node, where the second message carries a fourth indication, and the fourth indication is configured to indicate information of a data forwarding channel, and the data forwarding channel is configured to receive the downlink SDT data;
sending the downlink SDT data to the second access network node according to the second message.

Optionally, the processor is further configured to read the computer program in the memory to perform:
sending a third message to the second access network node, where the third message includes the downlink NAS signaling.

Optionally, the processor is further configured to read the computer program in the memory to perform:
initiating a paging within an RAN-based notification area (RNA), where the second access network node is located within the RNA.

In a fourth aspect, a small data transmission processing device is provided in the embodiment of the present disclosure, applied to a second access network node, including: a memory, a transceiver, and a processor:
the memory is configured to store a computer program; the transceiver is configured to receive and transmit data under the control of the processor; and the processor is configured to read the computer program in the memory to perform:
receiving small data transmission (SDT) configuration information sent by a first access network;
processing downlink SDT data and/or downlink NAS signaling of the target terminal according to the SDT configuration information;
where the target terminal is in a radio resource control (RRC)_INACTIVE state, and the access network node currently accessed by the target terminal is the second access network node.

Optionally, the processor is further configured to read the computer program in the memory to perform:
determining that the target terminal is accessed to the second access network node;
sending a first message to the first access network node, where the first message is configured to request a target terminal context;
receiving the target terminal context and the SDT configuration information sent by the first access network node.

Optionally, the processor is further configured to read the computer program in the memory to perform:
if it is determined according to the SDT configuration information that the downlink SDT data is to be processed while keeping the target terminal in an RRC_INACTIVE state, sending a second message to the first access network node, where the second message carries a fourth indication, and the fourth indication is configured to indicate information of a data forwarding channel, and the data forwarding channel is configured to receive the downlink SDT data;
receiving the downlink SDT data which is sent by the first access network node according to the second message;
processing the downlink SDT data according to the target terminal context, and sending the processed downlink SDT data to the target terminal.

Optionally, the processor is further configured to read the computer program in the memory to perform:
if it is determined according to the SDT configuration information that the downlink NAS signaling is to be processed while keeping the target terminal in an RRC_INACTIVE state, receiving the downlink NAS signaling which is sent by the first access network node;
processing the downlink NAS signaling according to the target terminal context, and sending the processed downlink NAS signaling to the target terminal.

Optionally, the processor is further configured to read the computer program in the memory to perform:
receiving a paging message which is sent by the first access network in an RAN-based notification area (RNA);
paging the target terminal according to the paging message.

Optionally, the processor is further configured to read the computer program in the memory to perform:
updating a data channel between the second access network node and a core network;
sending a fourth message to the target terminal, where the fourth message is configured to notify the target terminal to remain in the RRC_INACTIVE state.

In a fifth aspect, a small data transmission processing device is provided in the embodiment of the present disclosure, applied to a first access network node, including:
a first receiving unit, configured to receive downlink small data transmission (SDT) data and/or downlink non-access-stratum (NAS) signaling of a target terminal, where the target terminal is in a radio resource control (RRC)_INACTIVE state;
a first determining unit, configured to determine that an anchor point transfer occurs on the target terminal;
a first sending unit, configured to send SDT configuration information to a second access network node, where the second access network node is accessed by the target terminal, and the SDT configuration information is configured to process the downlink SDT data and/or the downlink NAS signaling of the target terminal.

In a sixth aspect, a small data transmission processing device is provided in the embodiment of the present disclosure, applied to a second access network node, including:
a first receiving unit, configured to receive small data transmission (SDT) configuration information sent by a first access network;
a first processing unit, configured to process downlink SDT data and/or a downlink NAS signaling of the target terminal according to the SDT configuration information;
where the target terminal is in a radio resource control (RRC)_INACTIVE state, and the access network node currently accessed by the target terminal is the second access network node.

In a seventh aspect, a processor-readable storage medium is provided in the embodiment of the present disclosure, storing a computer program, where the computer program is configured to enable the processor to execute the above method for processing small data transmission.

In an embodiment of the present disclosure, when the first access network node receives the downlink SDT data and /or downlink NAS signaling of the target terminal, if it is determined to perform anchor point transfer, the first access network node sends SDT configuration information to the second access network node. The second access network node can process the downlink SDT data and/or downlink NAS signaling of the target terminal keeping in an RRC_INACTIVE state based on the SDT configuration information. Therefore, according to the embodiment of the present disclosure, there is no need to resume the target terminal to an RRC_CONNECTED state as in the related art, and the second access network node can process the downlink SDT data and/or downlink NAS signaling of the target terminal keeping in an RRC_INACTIVE state, thereby saving air interface resources.

### BRIEF DESCRIPTION OF THE DRAWINGS

FIG.1 is a first flowchart of a method for processing small data transmission in an embodiment of the present disclosure;
FIG.2 is a second flowchart of a method for processing small data transmission in an embodiment of the present disclosure;
FIG.3 is a third flowchart of a method for processing small data transmission in an embodiment of the present disclosure;
FIG.4 is a fourth flowchart of a method for processing small data transmission in an embodiment of the present disclosure;
FIG.5 is a first structural view of a small data transmission processing device in an embodiment of the present disclosure;
FIG.6 is a second structural view of a small data transmission processing device in an embodiment of the present disclosure;
FIG.7 is a third structural view of a small data transmission processing device in an embodiment of the present disclosure; and
FIG.8 is a fourth structural view of the small data transmission processing device in an embodiment of the present disclosure.

### DETAILED DESCRIPTION

In the embodiments of the present disclosure, the term "and/or" describes the association relationship of associated objects, indicating that three relationships may exist. For example, A and/or B may represent three situations: A exists alone, A and B exist at the same time, and B exists alone. The character "/" generally indicates that the associated objects before and after are in an "or" relationship.

The term "plurality" in the embodiments of the present disclosure refers to two or more than two, and other quantifiers are similar thereto.

The following will be combined with the drawings in the embodiments of the present disclosure to clearly and completely describe the technical solutions in the embodiments of the present disclosure. Obviously, the described embodiments are only part of the embodiments of the present disclosure, not all of the embodiments. Based on the embodiments in the present disclosure, all other embodiments obtained by ordinary technicians in this field without creative work are within the scope of protection of the present disclosure.

For network-initiated downlink SDT data (DL SDT data) or signaling (such as SDT terminated at the terminal) (Mobile Terminated-Small Data Transmission, MT-SDT)) arrives, the anchor base station (for example, the first access network node in the embodiment of the present disclosure) pages the UE within the RNA range of the UE. If the terminal responds to the paging at a non-anchor base station (for example, the second access network node in the embodiment of the present disclosure), and the anchor base station decides to perform a context transfer, the access base station of the terminal cannot know whether the exact reason for the current UE resumption (UE Resume) is downlink SDT (DL SDT) data or downlink non-SDT (DL non-SDT) data, and therefore cannot determine the subsequent state transition and processing flow, but can only restore the UE's RRC connection according to the basic design of the RRC_INACTIVE state, and then send DL/UL data.

The above processing method is contrary to the original design intention of SDT. Therefore, for the scenario where only a small number of downlink small data packets/downlink signaling need to be transmitted, an additional air interface process is added, the process is cumbersome and the efficiency is very low.

To this end, the embodiments of the present disclosure provide a method and device for processing small data transmission to save air interface resources.

The method and the device are based on the same application concept. Since the method and the device solve the problem in a similar principle, the implementation of the device and the method can refer to each other, and the repeated parts will not be repeated.

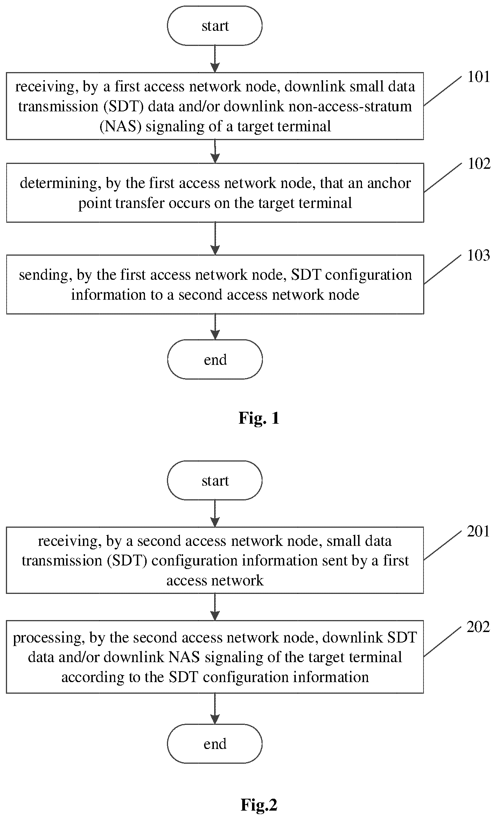

FIG.1 is a flow chart of a method for processing small data transmission in an embodiment of the present disclosure, as shown in FIG. 1, including the following steps:
Step 101: receiving, by a first access network node, downlink small data transmission (SDT) data and/or downlink non-access-stratum (NAS) signaling of a target terminal;
the target terminal is in a radio resource control (RRC)_INACTIVE state.

In actual applications, the terminal can perform data transmission during the random access process, that is, the terminal in the non-connected state (i.e., RRC_IDLE state or RRC_ INACTIVE state) can complete data transmission without switching the RRC state. This data transmission during the random access process is called Small Data Transmission (SDT).

In this step, the first access network node receives downlink SDT data and/or downlink NAS signaling of the target terminal from the core network.

Step 102: determining, by the first access network node, that an anchor point transfer occurs on the target terminal.

In the embodiments of the present disclosure, the method of determining the anchor point transfer by the first access network node is not limited. In practical applications, the first access network node may determine whether to transfer the anchor point based on one or more of information such as the amount of data to be processed, whether the target terminal moves within the RNA, and the type of data to be processed.

For example, if the target terminal does not move within the RNA, the first access network node may determine that anchor point transfer is not performed, otherwise it may determine that anchor point transfer is required. If it is determined that anchor point transfer is performed, the first access network node sends SDT configuration information to the second access network node. For example, if the data received by the first access network node includes SDT data and non-SDT data, then the first access network node may determine that anchor point transfer is not performed; if the received data only includes SDT data, then the first access network node may determine that anchor point transfer is required. For example, if the amount of received data is large, the first access network node may determine that anchor point transfer is required; otherwise, it may be determined that anchor point transfer is not required.

Step 103: sending, by the first access network node, SDT configuration information to a second access network node, where the SDT configuration information is configured to process the downlink SDT data and/or the downlink NAS signaling of the target terminal, and the second access network node is accessed by the target terminal.

Optionally, before this step, after receiving the downlink SDT data and/or downlink NAS signaling of the target terminal, the first access network node may initiate RAN paging in the RNA to trigger the paging terminal. The second access network node is located in the RNA. The first access network node and the access network node in the RNA may initiate air interface paging. After receiving the paging, the target terminal initiates the RRC recovery (RRCResume) process because the terminal receives the paging and needs to respond to the access (mt-access) initiated. If the access network node accessed by the target terminal is the second access network node, the second access network node may request to obtain the context information of the target terminal.

Specifically, in this step, the first access network node receives a first message from the second access network node, where the first message is configured to request the target terminal context. The first access network node sends the target terminal context and the SDT configuration information to the second access network node. The first message may be a context acquisition request for the target terminal UE.

The SDT configuration information includes: information of DRB used for SDT transmission, and/or information of SRB used for SDT transmission.

The information of the DRB used for SDT transmission includes one or more of the following:
an identifier of the DRB used for SDT transmission;
an identifier of the DRB for SDT transmission and a first indication, where the first indication is configured to indicate whether one or more DRBs for SDT transmission have downlink SDT data to be transmitted;
an identifier of the DRB used for SDT transmission and a second indication, where the second indication is configured to indicate information of downlink SDT data to be transmitted on one or more DRBs used for SDT transmission.

If the information of the DRB used for SDT transmission only includes the information of the DRB used for SDT transmission, then it can be considered that the DRBs indicated by the information of the DRB used for SDT transmission have no downlink SDT data to be transmitted. Among them, the information of the DRB used for SDT transmission can be represented in the form of a DRB list. Optionally, in the case of including a second indication, it can be considered that one or more DRBs used for SDT transmission of the second indication have downlink SDT data to be transmitted. Among them, the information of the downlink SDT data to be transmitted on one or more DRBs used for SDT transmission, such as the number and size of data packets.

Optionally, the information of the DRB used for SDT transmission may also include the first indication and the second indication at the same time, so as to more simply and directly determine the information of the downlink SDT data to be transmitted on the DRB used for SDT transmission.

The information of the SRB used for SDT transmission includes one or more of the following:
an identifier of the SRB used for SDT transmission;
an identifier of the SRB used for SDT transmission and a third indication, where the third indication is configured to indicate whether one or more SRBs used for SDT transmission have downlink NAS signaling to be transmitted.

If the signaling radio bearer SRB for SDT transmission only includes information of SRB used for SDT transmission, it can be considered that the DRBs indicated by the information of SRB used for SDT transmission have no downlink NAS signaling to be transmitted.

In an embodiment of the present disclosure, when the first access network node receives the downlink SDT data and /or downlink NAS signaling of the target terminal, if it is determined to perform anchor point transfer, the first access network node sends SDT configuration information to the second access network node. The second access network node can determine, based on the SDT configuration information, to process the downlink SDT data and/or downlink NAS signaling of the target terminal while keeping the target terminal in an RRC_INACTIVE state. Therefore, according to the embodiment of the present disclosure, there is no need to restore the target terminal to an RRC_CONNECTED state as in the related art, and the second access network node can process the downlink SDT data and/or downlink NAS signaling of the target terminal while determining to keep the target terminal in an RRC_INACTIVE state, thereby saving air interface resources.

Optionally, based on the above embodiment, to ensure smooth progress of the service, the first access network node may also send the downlink SDT data to the second access network node; and/or the first access network node may send the downlink NAS signaling to the second access network node.

When sending downlink SDT data, the first access network node may receive a second message sent by the second access network node, where the second message carries a fourth indication, and the fourth indication is configured to indicate information of a data forwarding channel, and the data forwarding channel is configured to receive downlink SDT data. Afterwards, the first access network node sends the downlink SDT data to the second access network node according to the second message.

The data forwarding channel information may include Xn data forwarding channel information. The first access network node sends downlink SDT data to the second access network node on the data forwarding channel corresponding to the downlink SDT data according to the second message, in particular, according to the data forwarding channel information.

When sending downlink NAS signaling, the first access network node sends a third message to the second access network node, and the third message includes the downlink NAS signaling. The third message may be a context acquisition response message or a dedicated Xn signaling. For example, the first access network node may send a NAS protocol data unit (Protocol Data Unit, PDU) to the second access network node via an Xn Application Protocol (XnAP) message. The NAS PDU may be included in the context acquisition response message or sent via dedicated Xn signaling.

Through the above manner, the second access network node can flexibly obtain downlink SDT data or downlink NAS signaling.

Referring to FIG. 2, FIG. 2 is a flow chart of a method for processing small data transmission in an embodiment of the present disclosure. As shown in FIG. 2, the method includes the following steps:
Step 201: receiving, by a second access network node, small data transmission (SDT) configuration information sent by a first access network.
the meaning of the SDT configuration information may refer to the description of the aforementioned embodiment.

Specifically, in actual application, before this step, the second access network node receives the paging message sent by the first access network in the RNA, and pages the target terminal according to the paging message. If the target terminal accesses the second access network node, the first access network node can determine whether anchor point transfer is required according to a certain strategy. If anchor point transfer is required, the first access network node sends SDT configuration information to the second access network node. Accordingly, the second access network node receives the SDT configuration information sent by the first access network.

Specifically, in this step, the second access network node determines that the target terminal is connected to the second access network node. For example, if the target terminal responds to the paging of the second access network, it can be determined that the target terminal is connected to the second access network node. Then, the second access network node sends a first message to the first access network node, and the first message is configured to request the target terminal context. Among them, the first message can be, for example, a UE context acquisition request. Afterwards, the second access network node receives the target terminal context and the SDT configuration information sent by the first access network node.

Step 202: processing, by the second access network node, downlink SDT data and/or a downlink NAS signaling of the target terminal according to the SDT configuration information;
where the target terminal is a terminal in a radio resource control (RRC)_INACTIVE state, and the access network node currently accessed by the target terminal is the second access network node.

According to the SDT configuration information, the second access network node may determine, according to a certain strategy, to process the downlink SDT data and/or downlink NAS signaling of the target terminal while keeping the target terminal in an RRC_INACTIVE state. The strategy may be set as required. For example, when the amount of data to be processed is large, the second access network node may choose to restore the target terminal to an RRC_CONNECTED state, otherwise the target terminal may be kept in an RRC_INACTIVE state.

If the second access network node determines that it is impossible to keep the target terminal in the RRC_INACTIVE state to process the downlink SDT data and/or downlink NAS signaling of the target terminal according to the SDT configuration information, the second access network node may process the target terminal in a traditional manner, for example, by restoring the target terminal to the RRC_CONNECTED state for processing.

To ensure smooth reception of downlink SDT data, in this step, if it is determined according to the SDT configuration information that the downlink SDT data is to be processed while keeping the target terminal in an RRC_INACTIVE state, the second access network node may send a second message to the first access network node, where the second message carries a fourth indication, and the fourth indication is configured to indicate information of a data forwarding channel, and the data forwarding channel is configured to receive downlink SDT data. Afterwards, the second access network node receives the downlink SDT data sent by the first access network node according to the second message, processes the downlink SDT data according to the target terminal context, and sends the processed downlink SDT data to the target terminal. For example, the second access network node may perform data encapsulation, screening, and the like.

To ensure smooth reception of downlink NAS signaling, if it is determined according to the SDT configuration information that the downlink NAS signaling is processed while keeping the target terminal in an RRC_INACTIVE state, the second access network node receives the downlink NAS signaling sent by the first access network node. Afterwards, the second access network node processes the downlink NAS signaling according to the target terminal context, and sends the processed downlink NAS signaling to the target terminal. For example, the NAS signaling may be encapsulated into an RRC message, etc. Specifically, the second access network node encapsulates the NAS PDU into an RRC message and sends it to the target terminal.

In an embodiment of the present disclosure, when the first access network node receives the downlink SDT data and /or downlink NAS signaling of the target terminal, if it is determined to perform anchor point transfer, the first access network node sends SDT configuration information to the second access network node. The second access network node can determine, based on the SDT configuration information, to process the downlink SDT data and/or downlink NAS signaling of the target terminal while keeping the target terminal in an RRC_INACTIVE state. Therefore, by utilizing the solution of the embodiment of the present disclosure, there is no need to restore the target terminal to an RRC_CONNECTED state as in the related art, and the second access network node can process the downlink SDT data and/or downlink NAS signaling of the target terminal while determining to keep the target terminal in an RRC_INACTIVE state, thereby saving air interface resources.

Optionally, if the data or signaling transmission is completed, the second access network node may also send a fourth message to the target terminal, where the fourth message is configured to notify the target terminal to remain in the RRC_INACTIVE state.

Optionally, the second access network node may also initiate a path switching process to update a data channel between the second access network node and the core network. Subsequent UL/DL SDT data or signaling may be directly transmitted between the second access network node and the core network.

In one embodiment of the disclosed embodiment, for a terminal in the RRC_INACTIVE state supporting SDT, when MT-SDT data (data) or NAS PDU arrives at the anchor base station (first access network node), the anchor base station initiates a paging process within the RNA. If the terminal responds to the paging at a non-anchor base station (second access network node), the non-anchor base station initiates a context acquisition request to the anchor base station. If the anchor base station decides to perform a context transfer, the context information of the terminal is provided to the non-anchor base station. At the same time, the anchor base station gives the decision-making power on how to perform MT-SDT transmission to the non-anchor base station.

In order to better assist non-anchor base stations in making decisions (for example, whether to restore the RRC connection), the anchor base station sends SDT configuration information to the non-anchor base station to indicate the status of the data/signaling currently pending by the anchor base station, such as: the identifier of the DRB used for SDT, whether there is data to be forwarded on one or more of these DRBs (i.e., downlink data to be transmitted), the number and size of DL SDT data packets on one or more DRBs used for SDT; the identifier of the SRB used for SDT, and whether there is downlink signaling to be transmitted on one or more of these DRBs.

The non-anchor base station decides whether to restore the terminal to the RRC connection state for data transmission (in a traditional manner) or to perform data transmission in an SDT manner (in the manner of the embodiment of the present disclosure) according to the received SDT configuration information. The anchor base station corresponds to the aforementioned first access network device, and the non-anchor base station corresponds to the aforementioned second access network device.

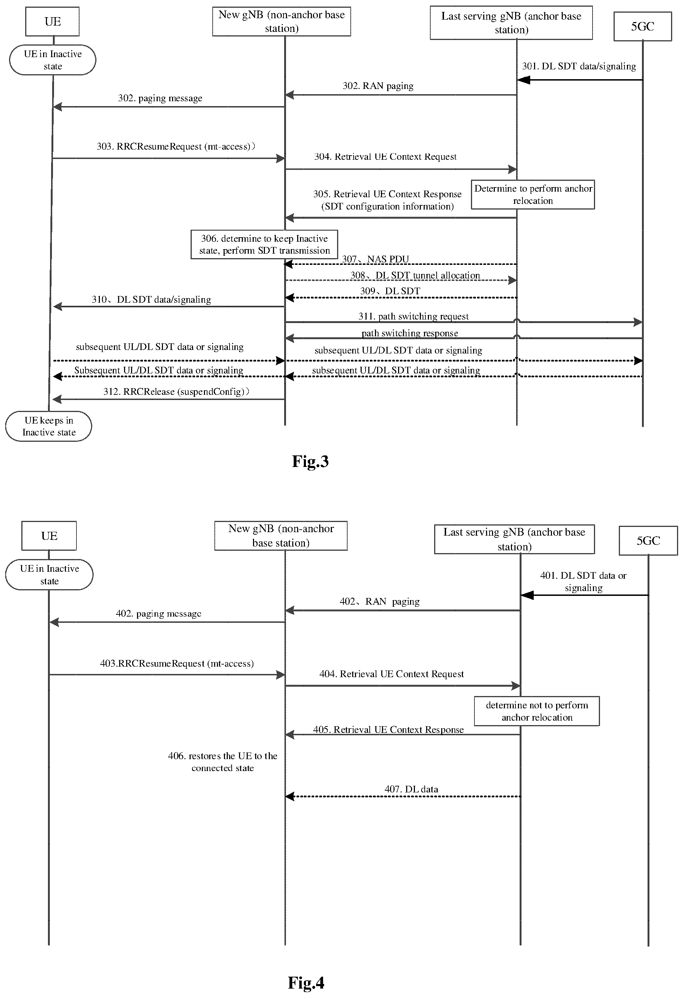

As shown in FIG.3, it is a flow chart of a downlink data transmission method in an embodiment of the present disclosure. This embodiment may include:
Step 301: the anchor base station receives DL SDT data or DL NAS signaling from the core network (included in the DOWNLINK NAS TRANSPORT message).
Step 302: the anchor base station initiates RNA paging in the RNA. The anchor base station and the non-anchor base station initiate air interface paging.
Step 303: after receiving the paging, the UE initiates the RRC recovery (RRCResume) process and sends an RRC recovery request (RRCResumeRequest) with the reason being mt-access.
Step 304: if the base station accessed by the UE is a non-anchor base station, the non-anchor base station initiates a UE context acquisition request (Retrieval UE Context Request) to the anchor base station.
Step 305: if the anchor base station decides to perform anchor transfer, the UE context is provided to the non-anchor base station through a context acquisition response message (Retrieval UE Context Response). The anchor base station provides SDT configuration information to the non-anchor base station through this message or a newly defined message. Such as: the identifier of the DRB used for SDT, whether there is data to be forwarded (i.e., downlink data to be transmitted) on one or more of these DRBs, the number and size of DL SDT data packets received on one or more DRBs used for SDT; the identifier of the SRB used for SDT, and whether there is downlink signaling to be transmitted on one or more of these DRBs.
Step 306: after acquiring the UE context and the above SDT configuration information, the non-anchor base station decides whether to keep the UE in the RRC_INACTIVE state for SDT data/signaling transmission.
Step 307: the anchor base station sends the NAS PDU to the non-anchor base station via an XnAP message, where the NAS PDU may be included in a context acquisition response message or in a dedicated Xn signaling.
Step 308: the non-anchor base station performs DL SDT tunnel allocation, allocates a corresponding Xn data forwarding channel for the SDT DRB with data to be forwarded, for receiving downlink SDT data, and sends information of the data channel to the anchor base station.
Step 309: the anchor base station sends the downlink SDT data to the non-anchor base station on the corresponding SDT DRB channel.
Step 310: the non-anchor base station processes the received DL SDT data or signaling (NAS PDU) according to the acquired UE context and sends it to the UE, where the NAS PDU is encapsulated into an RRC message.
Step 311: the non-anchor base station initiates a path switching process (becomes a new anchor base station), updates the data channel between the non-anchor base station and the core network; the core network sends a path switching response to the non-anchor base station. Subsequent UL/DL SDT data or signaling can be directly transmitted between the new anchor base station and the core network.
Step 312: after the data transmission is completed, the new anchor base station (i.e., the non-anchor base station) notifies the UE to remain in the RRC_INACTIVE through an RRC release (RRCRelease message) (e.g., RRCRelease (suspendConfig)).

Optionally, in step 304, if the base station accessed by the UE is an anchor base station, the UE initiates an RRCResume request to the anchor base station. The anchor base station completes the processing of DL SDT data and signaling according to the SDT configuration and sends it to the UE. In this case, the subsequent process after step 304 will not be performed.

As shown in FIG.4, it is a flow chart of a downlink data transmission method in an embodiment of the present disclosure. This embodiment may include:
Step 401: the anchor base station receiving DL SDT data or DL NAS signaling from the core network (included in the DOWNLINK NAS TRANSPORT message).
Step 402: the anchor base station initiates RAN paging in the RNA. The anchor base station and the non-anchor base station initiate air interface paging.
Step 403: after receiving the paging, the UE initiates an RRC recovery (RRCResume) process with the reason being mt-access.
Step 404: if the base station accessed by the UE is a non-anchor base station, the non-anchor base station initiates a UE context acquisition request to the anchor base station.
Step 405: the anchor base station decides not to perform SDT data transmission based on the number of DL SDT data packets or the arrival of DL non-SDT packets, and uses a traditional retrieval response message (e.g., a retrieval UE context response) to provide the complete UE context to the non-anchor base station, and the message does not include SDT configuration information.
Step 406: the non-anchor base station restores the UE to the RRC_CONNECTED state according to the Retrieval Response message.
Step 407: the anchor base station forwards the received DL data to the non-anchor base station on the corresponding tunnel, and the non-anchor base station uses the acquired configuration to complete data processing and air interface transmission.

For DL NAS processing, the anchor base station can instruct the Access and Mobility Management Function (AMF) NAS Non-delivery. Subsequently, the AMF decides whether to send DL NAS to the new base station after the new base station path is switched as needed.

It should be noted that the embodiment shown in FIG.4 is applicable to SDT transmission, and is also applicable to common non-SDT transmission, and a combination of SDT and non-SDT transmission.

The technical solution provided by the embodiments of the present disclosure can be applicable to a variety of systems, especially 5G systems. For example, the applicable systems may be global system of mobile communication (GSM) system, code division multiple access (CDMA) system, wideband code division multiple access (WCDMA) general packet radio service (GPRS) system, long term evolution (LTE) system, LTE frequency division duplex (FDD) system, LTE time division duplex (TDD) system, long term evolution advanced (LTE-A) system, universal mobile telecommunication system (UMTS), worldwide interoperability for microwave access (WiMAX) system, 5G new radio (NR) system, etc. These various systems include terminals and network equipment. The system may also include a core network part, such as an evolved packet system (EPS), a 5G system (5G System, 5GS), etc.

The terminal involved in the embodiments of the present disclosure may be a device that provides voice and/or data connectivity to a user, a handheld device with a wireless connection function, or other processing devices connected to a wireless modem. In different systems, the name of the terminal may also be different. For example, in a 5G system, the terminal may be called a user equipment (UE). A wireless terminal can communicate with one or more core networks (CN) via a radio access network (RAN). The wireless terminal may be a mobile terminal, such as a mobile phone (or a "cellular" phone) and a computer with a mobile terminal. For example, it may be a portable, pocket-sized, handheld, computer-built-in or vehicle-mounted mobile device that exchanges language and/or data with a radio access network. For example, personal communication service (PCS) phones, cordless phones, session initiation protocol (SIP) phones, wireless local loop (WLL) stations, personal digital assistants (PDAs), and other devices. A wireless terminal may also be referred to as a system, a subscriber unit, a subscriber station, a mobile station, a mobile station, a remote station, an access point, a remote terminal, an access terminal, a user terminal, a user agent, or a user device, but is not limited in the embodiments of the present disclosure.

The network device (such as an access network node) involved in the embodiments of the present disclosure may be a base station, which may include multiple cells that provide services to the terminal. Depending on the specific application scenario, the base station may also be called an access point, or may be a device in the access network that communicates with the wireless terminal through one or more sectors on the air interface, or other names. The network device may be used to interchange received air frames with Internet Protocol (IP) packets, and serve as a router between the wireless terminal and the rest of the access network, where the rest of the access network may include an Internet Protocol (IP) communication network. The network device may also coordinate the attribute management of the air interface. For example, the network device involved in the embodiments of the present disclosure may be a network device (Base Transceiver Station, BTS) in the Global System for Mobile communications (GSM) or Code Division Multiple Access (CDMA), or a network device (NodeB) in Wide-band Code Division Multiple Access (WCDMA), or an evolutionary network device (eNB or e-NodeB) in the long term evolution (LTE) system, a 5G base station (gNB) in the 5G network architecture (next generation system), or a home evolved Node B (HeNB), a relay node, a home base station (femto), a pico base station (pico), etc., which is not limited in the embodiments of the present disclosure. In some network structures, the network device may include a centralized unit (CU) node and a distributed unit (DU) node, and the centralized unit and the distributed unit may also be arranged geographically separately.

Network devices and terminals can each use one or more antennas for multiple input multiple output (MIMO) transmission. MIMO transmission can be single user MIMO (SU-MIMO) or multi-user MIMO (MU-MIMO). Depending on the form and number of antenna combinations, MIMO transmission can be two-dimensional MIMO (2D-MIMO), three-dimensional MIMO (3D-MIMO), full-dimensional (FD -MIMO) or massive MIMO (massive-MIMO), or it can be diversity transmission, precoded transmission or beamforming transmission, etc.

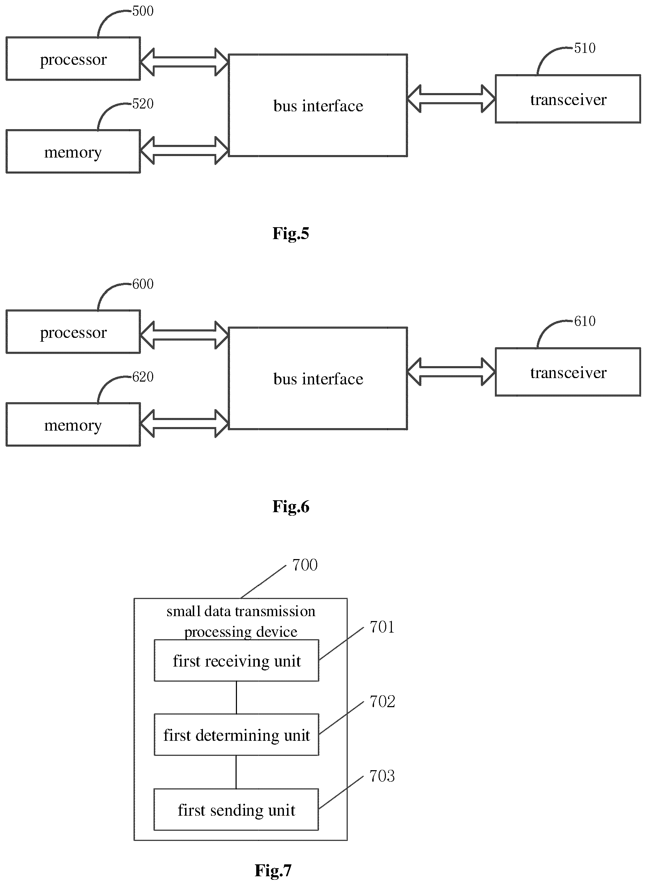

As shown in FIG.5, the small data transmission processing device according to the embodiment of the present disclosure is applied to a first access network node, and includes: a processor 500, configured to read a program in a memory 520, and execute the following process:
receiving downlink small data transmission (SDT) data and/or a downlink non-access-stratum (NAS) signaling of a target terminal, where the target terminal is in a radio resource control (RRC)_INACTIVE state;
determining that an anchor point transfer occurs on the target terminal; and
sending SDT configuration information to a second acce510ss network node, where the second access network node is accessed by the target terminal, and the SDT configuration information is configured to process the downlink SDT data and/or the downlink NAS signaling of the target terminal.

The transceiver 510 is configured to receive and send data under the control of the processor 500.

In Figure 5, the bus architecture can include any number of interconnected buses and bridges, specifically one or more processors represented by processor 500 and various circuits of memory represented by memory 520 are linked together. The bus architecture can also link various other circuits such as peripherals, regulators, and power management circuits together, which are all well known in the art, so they are not further described herein. The bus interface provides an interface. The transceiver 510 can be a plurality of components, that is, including a transmitter and a receiver, providing a unit for communicating with various other devices on a transmission medium. The processor 500 is responsible for managing the bus architecture and general processing, and the memory 520 can store data used by the processor 500 when performing operations.

The processor 500 may be a central processing unit (CPU), an application specific integrated circuit (ASIC), a field programmable gate array (FPGA) or a complex programmable logic device (CPLD). The processor may also adopt a multi-core architecture.

The processor 500 is responsible for managing the bus architecture and general processing, and the memory 520 can store data used by the processor 500 when performing operations.

The meaning of the SDT configuration information may refer to the description of the aforementioned embodiment.

The processor 500 is further configured to read the program and execute the following steps:
receiving a first message from the second access network node, where the first message is configured to request a target terminal context;
sending the target terminal context and the SDT configuration information to the second access network node.

The processor 500 is further configured to read the program and execute the following steps:
sending the downlink SDT data to the second access network node;
sending the downlink NAS signaling to the second access network node.

The processor 500 is further configured to read the program and execute the following steps:
receiving a second message sent by the second access network node, where the second message carries a fourth indication, and the fourth indication is configured to indicate information of a data forwarding channel, and the data forwarding channel is configured to receive the downlink SDT data;
sending the downlink SDT data to the second access network node according to the second message.

The processor 500 is further configured to read the program and execute the following steps:
sending a third message to the second access network node, where the third message includes the downlink NAS signaling.

The processor 500 is further configured to read the program and execute the following steps:
initiating a paging within an RAN-based notification area (RNA), where the second access network node is located within the RNA.

It should be noted here that the above-mentioned device provided in the embodiment of the present disclosure can implement all the method steps implemented by the first access network node in the above-mentioned method embodiment, and can achieve the same technical effect. The parts and beneficial effects of this embodiment that are the same as those in the method embodiment will not be described in detail here.

As shown in FIG.6, the small data transmission processing device according to the embodiment of the present disclosure is applied to the second access network node, including: a processor 600, which is configured to read the program in the memory 620 and execute the following process:
receiving small data transmission (SDT) configuration information sent by a first access network;
processing downlink SDT data and/or a downlink NAS signaling of the target terminal according to the SDT configuration information;
where the target terminal is a terminal in a radio resource control (RRC)_INACTIVE state, and the access network node currently accessed by the target terminal is the second access network node.

The transceiver 610 is configured to receive and send data under the control of the processor 600.

In Figure 6, the bus architecture can include any number of interconnected buses and bridges, specifically one or more processors represented by processor 600 and various circuits of memory represented by memory 620 are linked together. The bus architecture can also link various other circuits such as peripherals, regulators, and power management circuits together, which are all well known in the art, so they are not further described herein. The bus interface provides an interface. The transceiver 610 can be a plurality of components, that is, including a transmitter and a receiver, providing a unit for communicating with various other devices on a transmission medium. The processor 600 is responsible for managing the bus architecture and general processing, and the memory 620 can store data used by the processor 600 when performing operations.

The processor 600 may be a central processing unit (CPU), an application specific integrated circuit (ASIC), a field programmable gate array (FPGA) or a complex programmable logic device (CPLD). The processor may also adopt a multi-core architecture.

The processor 600 is responsible for managing the bus architecture and general processing, and the memory 620 can store data used by the processor 600 when performing operations.

The meaning of the SDT configuration information may refer to the description of the aforementioned embodiment.

The processor 600 is further configured to read the program and execute the following steps:
determining that the target terminal is accessed to the second access network node;
sending a first message to the first access network node, where the first message is configured to request a target terminal context;
receiving the target terminal context and the SDT configuration information sent by the first access network node.

The processor 600 is further configured to read the program and execute the following steps:
if it is determined according to the SDT configuration information that the downlink SDT data is to be processed while keeping the target terminal in an RRC_INACTIVE state, sending a second message to the first access network node, where the second message carries a fourth indication, and the fourth indication is configured to indicate information of a data forwarding channel, and the data forwarding channel is configured to receive the downlink SDT data;
receiving the downlink SDT data which is sent by the first access network node according to the second message;
processing the downlink SDT data according to the target terminal context, and sending the processed downlink SDT data to the target terminal.

The processor 600 is further configured to read the program and execute the following steps:
if it is determined according to the SDT configuration information that the downlink NAS signaling is to be processed while keeping the target terminal in an RRC_INACTIVE state, receiving the downlink NAS signaling which is sent by the first access network node;
processing the downlink NAS signaling according to the target terminal context, and sending the processed downlink NAS signaling to the target terminal.

The processor 600 is further configured to read the program and execute the following steps:
receiving a paging message which is sent by the first access network in an RAN-based notification area (RNA);
paging the target terminal according to the paging message.

The processor 600 is further configured to read the program and execute the following steps:
updating a data channel between the second access network node and a core network;
sending a fourth message to the target terminal, where the fourth message is configured to notify the target terminal to remain in the RRC_INACTIVE state.

It should be noted here that the above-mentioned device provided in the embodiment of the present disclosure can implement all the method steps implemented by the second access network node in the above-mentioned method embodiment, and can achieve the same technical effect. The parts and beneficial effects of this embodiment that are the same as the method embodiment will not be described in detail here.

FIG. 7, a small data transmission processing device 700 according to an embodiment of the present disclosure is applied to a first access network node, and includes:
a first receiving unit 701, configured to receive downlink small data transmission (SDT) data and/or a downlink non-access-stratum (NAS) signaling of a target terminal, where the target terminal is a terminal in a radio resource control (RRC)_INACTIVE state;
a first determining unit 702, configured to determine that an anchor point transfer occurs on the target terminal;
a first sending unit 703, configured to send SDT configuration information to a second access network node, where the second access network node is an access network node currently accessed by the target terminal, and the SDT configuration information is configured to process the downlink SDT data and/or the downlink NAS signaling of the target terminal.

The meaning of the SDT configuration information may refer to the description of the aforementioned method embodiment.

Optionally, the device may further include:
a second sending unit, configured to perform one or more of the following steps:
sending the downlink SDT data to the second access network node;
sending the downlink NAS signaling to the second access network node.

Optionally, the second sending unit is further configured to: receive a second message sent by the second access network node, where the second message carries a fourth indication, and the fourth indication is configured to indicate information of a data forwarding channel, and the data forwarding channel is configured to receive downlink SDT data; according to the second message, send the downlink SDT data to the second access network node.

Optionally, the second sending unit is further configured to: send a third message to the second access network node, where the third message includes the downlink NAS signaling.

Optionally, the device may further include:
a paging unit, configured to initiate paging in the RNA, wherein the second access network node is located in the RNA.

It should be noted here that the above-mentioned device provided in the embodiment of the present disclosure can implement all the method steps implemented by the first access network node in the above-mentioned method embodiment, and can achieve the same technical effect. The parts and beneficial effects of this embodiment that are the same as those in the method embodiment will not be described in detail here.

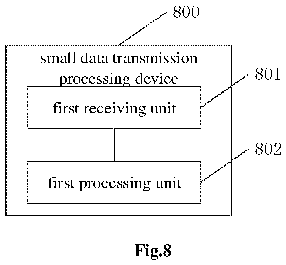

As shown in FIG.8, a small data transmission processing device 800 according to an embodiment of the present disclosure is applied to a second access network node, and includes:
a first receiving unit 801, configured to receive small data transmission (SDT) configuration information sent by a first access network;
a first processing unit 802, configured to process downlink SDT data and/or a downlink NAS signaling of the target terminal according to the SDT configuration information;
where the target terminal is a terminal in a radio resource control (RRC)_INACTIVE state, and the access network node currently accessed by the target terminal is the second access network node.

The meaning of the SDT configuration information may refer to the description of the aforementioned method embodiment.

Optionally, the first receiving unit includes:
a determining submodule, configured to determine that the target terminal is connected to the second access network node; a sending submodule, configured to send a first message to the first access network node, where the first message is configured to request a target terminal context;
a receiving submodule is configured to receive the target terminal context and the SDT configuration information sent by the first access network node.

Optionally, the device may further include:
a first sending unit, configured to send a second message to the first access network node if it is determined according to the SDT configuration information that the downlink SDT data is to be processed while keeping the target terminal in an RRC_INACTIVE state, where the second message carries a fourth indication, and the fourth indication is configured to indicate information of a data forwarding channel, and the data forwarding channel is configured to receive the downlink SDT data;
a second receiving unit, configured to receive the downlink SDT data sent by the first access network node according to the second message;
a first processing unit, configured to process the downlink SDT data according to the target terminal context, and send the processed downlink SDT data to the target terminal.

Optionally, the device may further include:
a third receiving unit, configured to receive the downlink NAS signaling sent by the first access network node if it is determined according to the SDT configuration information that the downlink NAS signaling is to be processed while keeping the target terminal in an RRC_INACTIVE state;
a second sending unit, configured to process the downlink NAS signaling according to the target terminal context, and send the processed downlink NAS signaling to the target terminal.

Optionally, the device may further include:
a fourth receiving unit, configured to receive a paging message sent by the first access network in the RNA;
a paging unit, configured to page the target terminal according to the paging message.

Optionally, the device may further include:
an updating unit, configured to update a data channel between the second access network node and a core network;
a third sending unit, configured to send a fourth message to the target terminal, where the fourth message is configured to notify the target terminal to remain in the RRC_INACTIVE state.

It should be noted here that the above-mentioned device provided in the embodiment of the present disclosure can implement all the method steps implemented by the second access network node in the above-mentioned method embodiment, and can achieve the same technical effect. The parts and beneficial effects of this embodiment that are the same as the method embodiment will not be described in detail here.

It should be noted that the division of units in the embodiments of the present disclosure is schematic and is only a logical function division. There may be other division methods in actual implementation. In addition, each functional unit in each embodiment of the present disclosure may be integrated into a processing unit, or each unit may exist physically separately, or two or more units may be integrated into one unit. The above-mentioned integrated unit may be implemented in the form of hardware or in the form of software functional units.

If the integrated unit is implemented in the form of a software functional unit and sold or used as an independent product, it can be stored in a processor-readable storage medium. Based on this understanding, the technical solution of the present disclosure is essentially or the part that contributes to the relevant technology or all or part of the technical solution can be embodied in the form of a software product. The computer software product is stored in a storage medium, including several instructions to enable a computer device (which can be a personal computer, server, or network device, etc.) or a processor (processor) to perform all or part of the steps of the method described in each embodiment of the present disclosure. The aforementioned storage medium includes: U disk, mobile hard disk, read-only memory (Read-Only Memory, ROM), random access memory (Random Access Memory, RAM), disk or optical disk and other media that can store program code.

The embodiment of the present disclosure also provides a processor-readable storage medium, on which a program is stored. When the program is executed by the processor, each process of the processing method embodiment of the above-mentioned small data transmission is implemented, and the same technical effect can be achieved. To avoid repetition, it is not repeated here. Among them, the readable storage medium can be any available medium or data storage device that the processor can access, including but not limited to magnetic storage (such as floppy disk, hard disk, tape, magneto -optical disk, magneto-optical disk (MO), etc.), optical storage (such as compact disk (CD), digital versatile disc (DVD), Blu-ray Disc (BD), high-definition versatile disc (HVD), etc.), and semiconductor storage (such as ROM, erasable programmable read-only memory (EPROM), electrically erasable programmable read only memory (EEPROM), non-volatile memory (NAND FLASH), solid-state disk (SSD), etc.)..

It should be noted that, in this article, the terms "include", "includes" or any other variations thereof are intended to cover non-exclusive inclusion, so that a process, method, article or device including a series of elements includes not only those elements, but also other elements not explicitly listed, or also includes elements inherent to such process, method, article or device. In the absence of further restrictions, an element defined by the sentence "includes a..." does not exclude the existence of other identical elements in the process, method, article or device including the element.

Through the description of the above implementation methods, those skilled in the art can clearly understand that the above-mentioned embodiment methods can be implemented by means of software plus a necessary general hardware platform, and of course by hardware, but in many cases the former is a better implementation method. Based on such an understanding, the technical solution of the present disclosure, or the part that contributes to the relevant technology, can be embodied in the form of a software product, which is stored in a storage medium (such as ROM/RAM, disk, CD), and includes a number of instructions for a terminal (which can be a mobile phone, computer, server, air conditioner, or network device, etc.) to execute the methods described in each embodiment of the present disclosure.

It should be noted that it should be understood that the division of the above modules is only a division of logical functions. In actual implementation, they can be fully or partially integrated into one physical entity, or they can be physically separated. And these modules can all be implemented in the form of software called by processing elements; they can also be all implemented in the form of hardware; some modules can also be implemented in the form of software called by processing elements, and some modules can be implemented in the form of hardware. For example, the determination module can be a separately established processing element, or it can be integrated in a chip of the above-mentioned device for implementation. In addition, it can also be stored in the memory of the above-mentioned device in the form of program code, and called and executed by a processing element of the above-mentioned device. The implementation of other modules is similar. In addition, these modules can be fully or partially integrated together, or they can be implemented independently. The processing element described here can be an integrated circuit with signal processing capabilities. In the implementation process, each step of the above method or each module above can be completed by an integrated logic circuit of hardware in the processor element or instructions in the form of software.

For example, each module, unit, sub-unit or sub-module may be one or more integrated circuits configured to implement the above method, such as one or more application specific integrated circuits (ASIC), or one or more digital signal processors (DSP), or one or more field programmable gate arrays (FPGA). For another example, when a module above is implemented in the form of a processing element scheduling program code, the processing element may be a general-purpose processor, such as a central processing unit (CPU) or other processor that can call program code. For another example, these modules may be integrated together and implemented in the form of a system-on-a-chip (SOC).

The terms "first", "second", etc. in the specification and claims of the present disclosure are used to distinguish similar objects, and are not necessarily used to describe a specific order or sequence. It should be understood that the data used in this way can be interchanged where appropriate, so that the embodiments of the present disclosure described here, such as those illustrated or described here, are implemented in a sequence other than the order. In addition, the terms "including" and "having" and any of their variations are intended to cover non-exclusive inclusions, for example, a process, method, system, product or device that includes a series of steps or units is not necessarily limited to those steps or units clearly listed, but may include other steps or units that are not clearly listed or inherent to these processes, methods, products or devices. In addition, the use of "and/or" in the specification and claims represents at least one of the connected objects, such as A and/or B and/or C, indicating the inclusion of 7 situations including single A, single B, single C, and both A and B exist, both B and C exist, both A and C exist, and both A, B and C exist. Similarly, the use of " at least one of A and B" in the specification and claims should be understood as "single A, single B, or both A and B exist".

The embodiments of the present disclosure are described above in conjunction with the accompanying drawings, but the present disclosure is not limited to the above-mentioned specific implementation methods. The above-mentioned specific implementation methods are merely illustrative and not restrictive. Under the guidance of the present disclosure, ordinary technicians in this field can also make many forms without departing from the scope of protection of the purpose of the present disclosure and the claims, all of which are within the protection of the present disclosure.

## Claims

1. A method for processing small data transmission, comprising:
receiving, by a first access network node, downlink small data transmission (SDT) data and/or downlink non-access-stratum (NAS) signaling of a target terminal, wherein the target terminal is in a radio resource control (RRC)_INACTIVE state;
determining, by the first access network node, that an anchor point transfer occurs on the target terminal; and
sending, by the first access network node, SDT configuration information to a second access network node, wherein the second access network node is accessed by the target terminal, and the SDT configuration information is configured to process the downlink SDT data and/or the downlink NAS signaling of the target terminal.

2. The method according to claim 1, wherein the sending, by the first access network node, the SDT configuration information to the second access network node comprises:
receiving, by the first access network node, a first message from the second access network node, wherein the first message is configured to request a target terminal context;
sending, by the first access network node, the target terminal context and the SDT configuration information to the second access network node.

3. The method according to claim 2, wherein the SDT configuration information comprises: information of a data radio bearer (DRB) used for SDT transmission, and/or information of a signaling radio bearer (SRB) used for SDT transmission.

4. The method according to claim 3, wherein the information of the DRB used for SDT transmission comprises one or more of the following:
an identifier of the DRB;
an identifier of the DRB and a first indication, wherein the first indication is configured to indicate whether one or more DRBs for SDT transmission have downlink SDT data to be transmitted; or
an identifier of the DRB and a second indication, wherein the second indication is configured to indicate information of downlink SDT data to be transmitted on one or more DRBs used for SDT transmission.

5. The method according to claim 3, wherein the information of the SRB for SDT transmission comprises one or more of the following:
an identifier of the SRB; or
an identifier of the SRB and a third indication, wherein the third indication is configured to indicate whether one or more SRBs used for SDT transmission have downlink NAS signaling to be transmitted.

6. The method according to claim 1, wherein after sending, by the first access network node, the SDT configuration information to the second access network node, the method further comprises one or more of the following:
sending, by the first access network node, the downlink SDT data to the second access network node; or
sending, by the first access network node, the downlink NAS signaling to the second access network node.

7. The method according to claim 6, wherein sending, by the first access network node, the downlink SDT data to the second access network node comprises:
receiving, by the first access network node, a second message sent by the second access network node, wherein the second message carries a fourth indication, and the fourth indication is configured to indicate information of a data forwarding channel, and the data forwarding channel is configured to receive the downlink SDT data;
sending, by the first access network node, the downlink SDT data to the second access network node according to the second message.

8. The method according to claim 6, wherein the sending, by the first access network node, the downlink NAS signaling to the second access network node comprises:
sending, by the first access network node, a third message to the second access network node, wherein the third message comprises the downlink NAS signaling.

9. The method according to claim 1, wherein before the sending, by the first access network node, the SDT configuration information to the second access network node, the method further comprises:
initiating, by the first access network node, a paging within an RAN-based notification area (RNA), wherein the second access network node is located within the RNA.

10. A method for processing small data transmission, comprising:
receiving, by a second access network node, small data transmission (SDT) configuration information sent by a first access network;
processing, by a second access network node, downlink SDT data and/or downlink NAS signaling of the target terminal according to the SDT configuration information;
wherein the target terminal is in a radio resource control (RRC)_INACTIVE state, and the access network node accessed by the target terminal is the second access network node.

11. The method according to claim 10, wherein receiving, by the second access network node, the SDT configuration information sent by the first access network comprises:
determining, by the second access network node, that the target terminal is accessed to the second access network node;
sending, by the second access network node, a first message to the first access network node, wherein the first message is configured to request a target terminal context; and
receiving, by the second access network node, the target terminal context and the SDT configuration information sent by the first access network node.

12. The method according to claim 10, wherein the SDT configuration information comprises: information of a data radio bearer (DRB) used for SDT transmission, and/or information of a signaling radio bearer (SRB) used for SDT transmission.

13. The method according to claim 12, wherein the information of the DRB used for SDT transmission comprises one or more of the following:
an identifier of the DRB;
an identifier of the DRB and a first indication, wherein the first indication is configured to indicate whether one or more DRBs for SDT transmission have downlink SDT data to be transmitted; or
an identifier of the DRB and a second indication, wherein the second indication is configured to indicate information of downlink SDT data to be transmitted on one or more DRBs used for SDT transmission.

14. The method according to claim 12, wherein the information of the SRB for SDT transmission comprises one or more of the following:
an identifier of the SRB; or
an identifier of the SRB and a third indication, wherein the third indication is configured to indicate whether one or more SRBs used for SDT transmission have downlink NAS signaling to be transmitted.

15. The method according to claim 10, wherein the second access network node processing the downlink SDT data of the target terminal according to the SDT configuration information comprises:
if it is determined according to the SDT configuration information that the downlink SDT data is to be processed while keeping the target terminal in an RRC_INACTIVE state, sending, by the second access network node, a second message to the first access network node, wherein the second message carries a fourth indication, and the fourth indication is configured to indicate information of a data forwarding channel, and the data forwarding channel is configured to receive the downlink SDT data;
receiving, by the second access network node, the downlink SDT data which is sent by the first access network node according to the second message;
processing, by the second access network node, the downlink SDT data according to the target terminal context, and sending the processed downlink SDT data to the target terminal.

16. The method according to claim 10, wherein the processing, by the second access network node, the downlink NAS signaling of the target terminal according to the SDT configuration information comprises:
if it is determined according to the SDT configuration information that the downlink NAS signaling is to be processed while keeping the target terminal in an RRC_INACTIVE state, receiving, by the second access network node, the downlink NAS signaling which is sent by the first access network node;
processing, by the second access network node, the downlink NAS signaling according to the target terminal context, and sending the processed downlink NAS signaling to the target terminal.

17. The method according to claim 10, wherein before the receiving, by the second access network node, the SDT configuration information sent by the first access network, the method further comprises:
receiving, by the second access network node, a paging message which is sent by the first access network in an RAN-based notification area (RNA);
paging, by the second access network node, the target terminal according to the paging message.

18. The method according to claim 10, wherein after the processing, by the second access network node, the downlink SDT data and/or the downlink NAS signaling of the target terminal according to the SDT configuration information, the method further comprises one or more of the following:
updating, by the second access network node, a data channel between the second access network node and a core network; or
sending, by the second access network node, a fourth message to the target terminal, wherein the fourth message is configured to notify the target terminal to remain in the RRC_INACTIVE state.

19. A small data transmission processing device, applied to a first access network node, comprising: a memory, a transceiver, and a processor:
the memory is configured to store a computer program; the transceiver is configured to receive and transmit data under the control of the processor; and the processor is configured to read the computer program in the memory to perform:
receiving downlink small data transmission (SDT) data and/or downlink non-access-stratum (NAS) signaling of a target terminal, wherein the target terminal is in a radio resource control (RRC)_INACTIVE state;
determining that an anchor point transfer occurs on the target terminal; and
sending SDT configuration information to a second access network node, wherein the second access network node is accessed by the target terminal, and the SDT configuration information is configured to process the downlink SDT data and/or the downlink NAS signaling of the target terminal.

20. The device according to claim 19, wherein the processor is further configured to read the computer program in the memory to perform:
receiving a first message from the second access network node, wherein the first message is configured to request a target terminal context;
sending the target terminal context and the SDT configuration information to the second access network node.

21. A small data transmission processing device, applied to a second access network node, comprising: a memory, a transceiver, and a processor:
the memory is configured to store a computer program; the transceiver is configured to receive and transmit data under the control of the processor; and the processor is configured to read the computer program in the memory to perform:
receiving small data transmission (SDT) configuration information sent by a first access network;
processing downlink SDT data and/or downlink NAS signaling of the target terminal according to the SDT configuration information;
wherein the target terminal is a terminal in a radio resource control (RRC)_INACTIVE state, and the access network node currently accessed by the target terminal is the second access network node.

22. The device according to claim 21, wherein the processor is further configured to read the computer program in the memory to perform:
determining that the target terminal is accessed to the second access network node;
sending a first message to the first access network node, wherein the first message is configured to request a target terminal context;
receiving the target terminal context and the SDT configuration information sent by the first access network node.

23. The device according to claim 21, wherein the processor is further configured to read the computer program in the memory to perform:
if it is determined according to the SDT configuration information that the downlink SDT data is to be processed while keeping the target terminal in an RRC_INACTIVE state, sending a second message to the first access network node, wherein the second message carries a fourth indication, and the fourth indication is configured to indicate information of a data forwarding channel, and the data forwarding channel is configured to receive the downlink SDT data;
receiving the downlink SDT data which is sent by the first access network node according to the second message;
processing the downlink SDT data according to the target terminal context, and sending the processed downlink SDT data to the target terminal.

24. The device according to claim 21, wherein the processor is further configured to read the computer program in the memory to perform:
if it is determined according to the SDT configuration information that the downlink NAS signaling is to be processed while keeping the target terminal in an RRC_INACTIVE state, receiving the downlink NAS signaling which is sent by the first access network node;
processing the downlink NAS signaling according to the target terminal context, and sending the processed downlink NAS signaling to the target terminal.

25. A small data transmission processing device, applied to a first access network node, comprising:
a first receiving unit, configured to receive downlink small data transmission (SDT) data and/or downlink non-access-stratum (NAS) signaling of a target terminal, wherein the target terminal is in a radio resource control (RRC)_INACTIVE state;
a first determining unit, configured to determine that an anchor point transfer occurs on the target terminal;
a first sending unit, configured to send SDT configuration information to a second access network node, wherein the second access network node is accessed by the target terminal, and the SDT configuration information is configured to process the downlink SDT data and/or the downlink NAS signaling of the target terminal.

26. A small data transmission processing device, applied to a second access network node, comprising:
a first receiving unit, configured to receive small data transmission (SDT) configuration information sent by a first access network;
a first processing unit, configured to process downlink SDT data and/or a downlink NAS signaling of the target terminal according to the SDT configuration information;
wherein the target terminal is a terminal in a radio resource control (RRC)_INACTIVE state, and the access network node currently accessed by the target terminal is the second access network node.

27. A processor-readable storage medium, storing a computer program, wherein the computer program is configured to enable the processor to execute the method according to any one of claims 1 to 18.
